(19) Europäisches Patentamt
European Patent Office
Office européen des brevets

(11)  EP 2 610 484 A1

(12)  **EUROPEAN PATENT APPLICATION**

(43) Date of publication:
**03.07.2013  Bulletin 2013/27**

(51) Int Cl.:
*F03D 7/02* (2006.01)

(21) Application number: **11382402.3**

(22) Date of filing: **26.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vestas Wind Systems A/S 8200 Aarhus N (DK)**

(72) Inventor: **Matesanz Gil, Alvaro E-28760 Tres Cantos-Madrid (ES)**

(74) Representative: **ABG Patentes, S.L. Avenida de Burgos, 16D Edificio Euromor 28036 Madrid (ES)**

(54)  **Method for controlling a wind turbine**

(57)  Method for controlling a wind turbine, comprising the steps of determining a boundary layer profile of the wind coming towards the wind turbine, determining the wind velocity at a predetermined height based on the boundary layer profile determined, and operating the wind turbine to maintain the emitted noise below a predetermined noise level when the wind velocity at the predetermined height is below a predetermined value.

FIG. 3

**Description**

**Technical field**

The present invention relates to a method for controlling a wind turbine that allows the optimization of power output in a wind turbine placed in a wind farm while maintaining the noise emission below the legal limits defined by local regulations.

**Background**

A consequence of the use of wind turbines to produce power is the generation of noise both from the mechanical system and from the blades of the wind turbines, which causes great discomfort to residents living in areas neighbouring wind farms. The nature of noise generation by wind turbines depends on a number of factors which often interact and among which are site topography, the presence of natural or artificial obstacles between emitter and receptor, the wind velocity, the wind direction and the nature of the atmospheric boundary layer, which makes very difficult to predict with enough accuracy the level of noise emitted when a wind turbine is placed in a real environment.

Strategies to reduce noise from an existing wind turbine usually are a combination of rotational speed reduction and pitch setting modification to operate the wind turbine in a low-noise mode. The operation of the wind turbine in a low-noise mode has the side effect of reducing the power output of the wind turbine, and therefore impacts in a negative way in the economic output of the wind farm. Nevertheless, the noise caused by the wind increases with the wind velocity and for high winds the noise from the wind turbine is masked by the natural noise caused by the wind itself. Therefore, most of wind turbine noise control modes return to the standard mode when wind velocity is greater than a specific value usually defined in the local noise regulations. However, the fact that some noise regulations define the noise measurement height at values different from the hub height introduces new variables in the problem, such as the wind turbine tower height and the wind velocity variation with height.

A first problem with this strategy is that noise is measured close to the ground while a wind turbine is generally measuring the wind at the wind turbine hub height. Generally, it is not feasible to put wind velocity sensors low in the field, at the height according to the standard because they are at risk to be destroyed, notably by people. To solve this difficulty the wind velocity variation with height is often approximated using a power law:

$$\frac{v}{v_{ref}} = \left(\frac{h}{h_{ref}}\right)^{\alpha},$$

$v$ being the wind velocity at height h, $v_{ref}$ the wind velocity at a reference height $h_{ref}$ and $\alpha$ the shear exponent, which provides the wind velocity variation with height, and a typical value of wind shear exponent is estimated for the type of terrain in which the wind turbine is located. The value of the wind velocity where standard operation mode can be used is determined thus as a function of hub height, shear exponent, noise measurement height and the critical wind velocity $v_{ref}$ defined in the corresponding local noise regulation.

However, the wind shear exponent is highly dependent on environmental conditions, such as temperature, stability of the atmosphere or day time. Therefore, the operation of the wind turbine according to the known method is based on a typical value which is far from accurate on the entire working regime, leading to an excess of noise emission outside legal limits if the shear exponent is underestimated, or to an excess of power production curtailment, if the shear exponent is overestimated.

Therefore it is an object of the present invention to provide a method for controlling a wind turbine which solves the abovementioned drawbacks present in the prior art, i.e. assuring that the noise limits imposed by regulations are fulfilled while the power output is improved if wind characteristics are favourable.

**SUMMARY OF THE INVENTION**

This and other objects of the invention are achieved by a method according to independent claim 1 and a wind turbine system according to claim 14. Favourable embodiments are defined by the dependent claims.

The method for controlling a wind turbine according to the invention comprises the steps of determining a boundary layer profile of the wind coming towards the wind turbine, determining the wind velocity at a predetermined height based on the boundary layer profile, and operating the wind turbine to maintain the emitted noise below a predetermined noise level when the wind velocity at the predetermined height is below a predetermined value.

The boundary layer is understood as the layer of fluid near the surface of the wind turbine, in which the velocity of the fluid changes from zero at the surface to the free stream value away from the surface.

Advantageously, the method of the invention allows improving the performance of the wind turbine without the risk of exceeding a predetermined noise level by determining the upper limit of velocity at hub height by direct evaluation of the boundary layer profile.

In an embodiment of the invention, the boundary layer profile is determined based on a measurement of at least one sensor.

A sensor installed at the height that is defined by the noise regulation can be used for determining the boundary layer profile.

The boundary layer profile can be determined based on a measurement of two or more sensors positioned at different heights to determine the value of instantaneous wind shear exponent.

The boundary layer profile can be also determined using systems of remote sensing such as lidar, sodar, etc.

Depending on the nature of the wind farm this process can be done turbine by turbine or in a reduced set of points in the wind farm.

The noise propagation could depend also on the wind direction because some correction factor could be necessary to take into account the terrain effect. In an embodiment of the invention, the signal of wind direction is used in combination with the wind velocity to determine the upper limit for noise at hub height. With this embodiment, the method of the invention can be performed only in directions where noise reduction has to be achieved.

In an embodiment, the method for controlling a wind turbine comprises the step of developing correlations between the boundary layer profile determined and at least one environmental variable.

In an embodiment, the environmental variable is selected from temperature, air density, wind speed, solar radiation, wind direction and turbulence.

In an embodiment, the step of developing correlations between the boundary layer profile determined and at least one environmental variable is performed during a predefined period of time.

In an embodiment, the method comprises determining the boundary layer profile based on at least one environmental variable and on the correlations developed between the profile of the boundary layer determined and said at least one environmental variable.

These and other aspects of the invention will be apparent from and elucidated with reference to the embodiments described hereinafter.

All the features described in this specification (including the claims, description and drawings) and/or all the steps of the described method can be combined in any combination, with the exception of combinations of such mutually exclusive features and/or steps.

**BRIEF DESCRIPTION OF THE DRAWINGS**

The invention will be better understood and its numerous objects and advantages will become more apparent to those skilled in the art by reference to the following drawings, in conjunction with the accompanying specification, in which:

Figures 1-3 show a schematic view of a wind park, the operation of which is controlled in order to limit the noise emitted.

Figure 4 schematically shows some of the variables involved in the method of the invention.

Figure 5 shows the real wind profile compared with the typical one in a situation where the real shear exponent is greater than the typical one.

Figure 6 shows the real wind profile compared with the typical one in a situation where the real shear exponent is smaller than the typical one.

Figure 7 shows a flowchart of an embodiment of the method of the invention.

Figure 8 shows a flowchart of an embodiment of the method of the invention.

**DETAILED DESCRIPTION OF A PREFERRED EMBODIMENT**

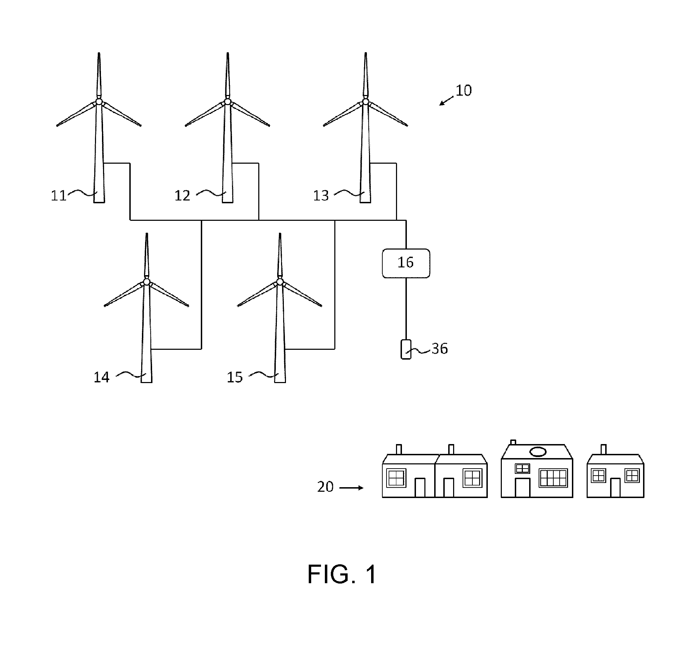

Figure 1 schematically shows a wind farm (10) and a village (20) located in its vicinity, the wind farm (10) comprising a plurality of wind turbines (11-15), a wind farm controller (16) and a sensing unit (36). The sensing unit (16) is adapted to determine a boundary layer profile of the wind coming towards at least one wind turbine. Processing means (not depicted) are adapted to determine the wind velocity at a predetermined height based on the boundary layer profile determined. The controller is a configured to adjust at least one operating parameter of the wind turbine to make the wind turbine work in a low-noise mode when the wind velocity at a predetermined height is below a specified critical value.

The sensing unit comprises at least one sensor capable of sensing the wind velocity, preferably a plurality of sensors located at different heights, or an only sensor capable of determining the boundary layer profile, such as a lidar or a sodar.

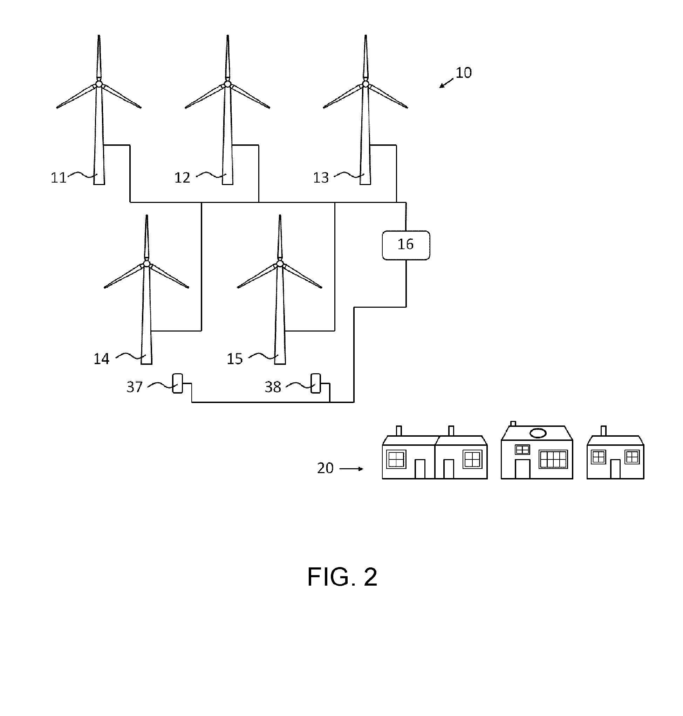

In the previous embodiment one sensing unit has been described. However, depending on the nature of the wind farm and its location, more than one sensing unit can be provided to determine the boundary layer profile at a plurality of points of the wind farm. Figure 2 schematically depicts an embodiment comprising two sensing units (37, 38) to determine the boundary layer profile at two different points of the wind farm, such that a number of wind turbines (11, 14) are operated according to the wind velocity determined based on the boundary layer profile determined by a first sensing unit (37) and a number of wind turbines (12, 13, 15) are operated according to the wind velocity determined based on the boundary layer profile determined by the second sensing unit (38).

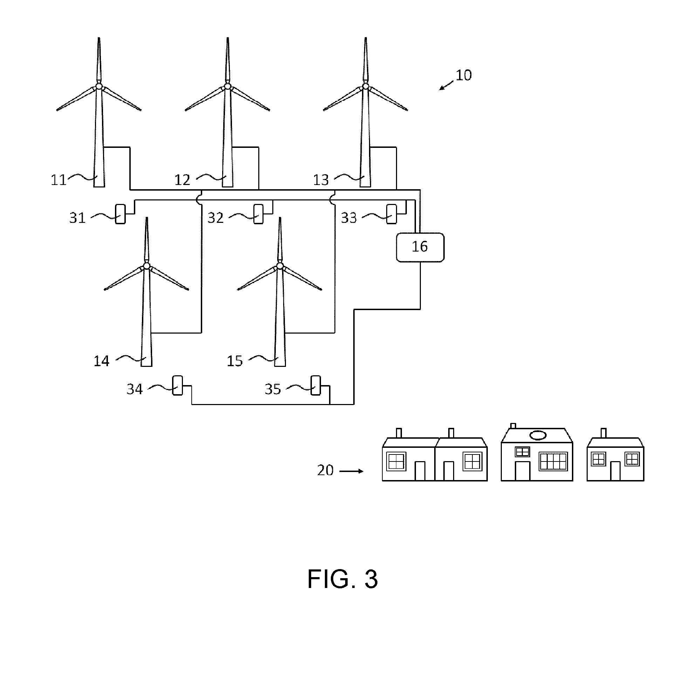

The process can be even done turbine by turbine, as illustrated in Figure 3, where the wind farm (10) comprises a sensing unit (31-35) associated to each wind turbine (11-15), such that the boundary layer profile of the wind coming towards each of the wind turbines (11-15) is determined. The wind farm controller can thus control the operation of each wind turbine according to the specific boundary layer profile determined for said wind turbine to maintain the noise emitted by the wind farm within the legal limits. This embodiment is preferred where the nature of the wind farm, such as site topography, or the presence of obstacles, makes the boundary layer profile highly dependent on the specific point of measurement.

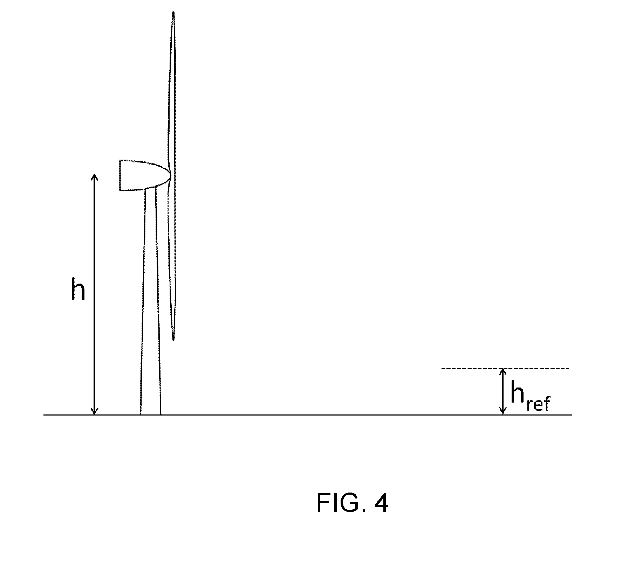

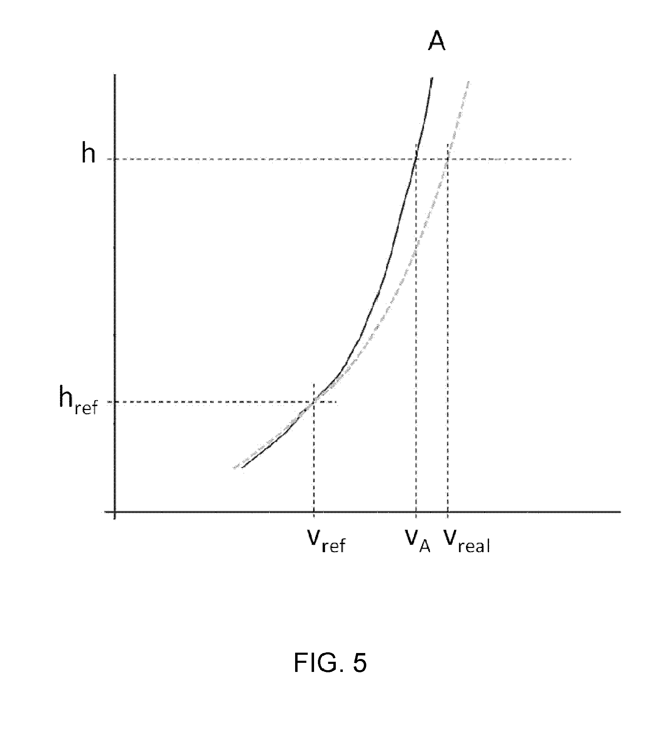

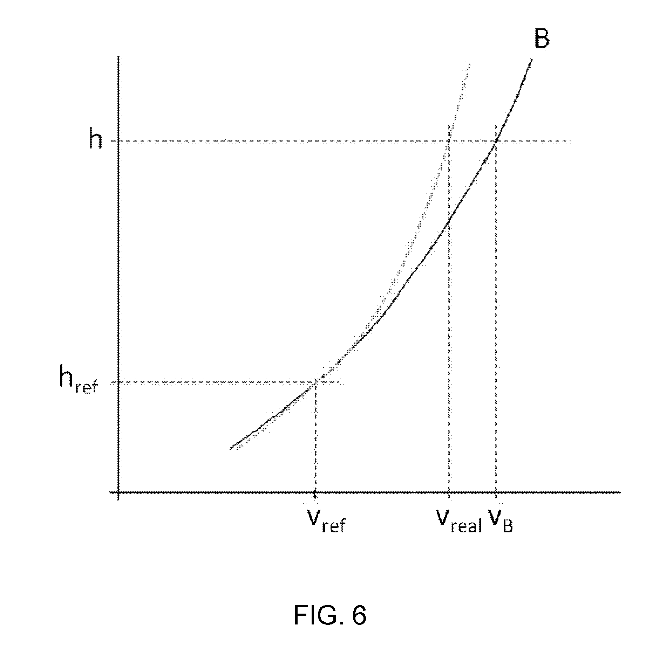

Figures 5 and 6 show an example of how the real wind shear can fluctuate around an expected wind shear. In figures 5 and 6 the wind velocity $v$ and the height $h$ have been schematically represented in the horizontal and vertical axis, respectively. In the figures, $h_{ref}$ corresponds to the height at which noise is measured according to the regulations, $v_{ref}$ corresponds to the wind velocity value at height $h_{ref}$, above which wind velocity the natural noise caused by the wind is assumed to mask the noise from the wind turbine and $h$ is the height at which the hub is located (as shown in figure 4). The curves represent the variation of the wind velocity with height for different values of shear exponent.

If the wind velocity is measured at a height $h$ different from the reference height $h_{ref}$, as is usually the case, the wind velocity at height $h$ corresponding to wind velocity $v_{ref}$ at height $h_{ref}$ needs to be estimated assuming a value of the wind shear exponent. In figure 5 curve A corresponds to a typical value of wind shear exponent assumed for a type of terrain, whereas the grey dashed curve corresponds to the real wind shear, with a wind shear exponent greater than the typical value assumed. According to curve A, the wind velocity ($v_A$) at height h above which the wind turbine can be operated in the standard operation mode would be lower than the real wind velocity at height $h$ ($v_{real}$) corresponding to a wind velocity $v_{ref}$ at height $h_{ref}$. Consequently, the standard operating mode of the wind turbine would be set for a wind velocity lower than the one required by the regulation and the noise emitted by the wind turbine would exceed the legal limits.

On the other hand (figure 6), if the real shear exponent (grey dashed curve) is smaller than the typical one (curve B) assumed for the determination of the wind velocity, the wind velocity $v_B$ determined at height h as corresponding to wind velocity $v_{ref}$ at height $h_{ref}$ and taken as a reference for setting the operation mode of the wind turbine is greater than the real wind velocity at height h ($v_{real}$) corresponding to a wind velocity $v_{ref}$ at height $h_{ref}$. Consequently, the standard operation mode of the wind turbine would be set for a wind velocity greater than the one required by the regulation and the power production of the wind turbine would be below its capabilities for wind velocities between $v_{real}$ and $v_B$.

One example of the above problem is the change in the wind shear exponent originated by the day-night cycle which can create important variations in the boundary layer profile because of the effect of positive or negative heating of air. In a flat terrain during a sunny day the wind shear exponent can be about 0.16, but during night the air is cooled by the earth surface and the boundary layer becomes more laminar, so this parameter can reach values of the order of 0.3-0.4. Therefore, the wind turbine will be noisier than expected during night time if the operation of the wind turbine is not adjusted to the new boundary layer profile, as explained with reference to figure 5.

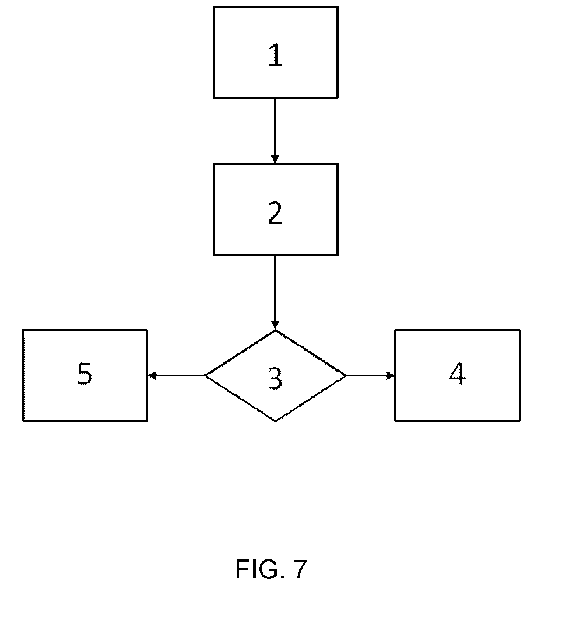

A preferred embodiment of the method for controlling a wind turbine according to the invention is schematically shown in the flowchart of figure 7 and comprises the steps of determining a boundary layer profile of the wind coming towards the wind turbine (1); determining the wind velocity at a predetermined height based on the boundary layer profile determined (2); and operating the wind turbine (3) to maintain the emitted noise below a predetermined noise level when the wind velocity at the predetermined height is below a predetermined value. The step of operating the wind turbine (3) to maintain the emitted noise below a predetermined noise level preferably comprises operating the wind turbine in a low-noise mode when the wind velocity determined is below a predefined value (5) and operating the wind turbine in the standard mode, at its nominal r.p.m., when the wind velocity determined is above a predefined value (4).

Due to the determination of the boundary layer profile, the method of the invention allows to improve the performance of the wind turbine without the risk of exceeding a predetermined noise level.

Operation of the wind turbine to maintain the emitted noise below a predetermined noise level can be performed reducing the rotational speed or changing the pitch settings, for example.

In an embodiment of the invention, the boundary layer profile is determined based on a measurement of at least one sensor capable of sensing the wind velocity, preferably a plurality of sensors located at different heights, or an only sensor capable of determining the boundary layer profile, such as a lidar or a sodar.

The method of the invention can be used to control a wind farm comprising a plurality of wind turbines, by controlling one, a plurality of or all the turbines of the wind farm.

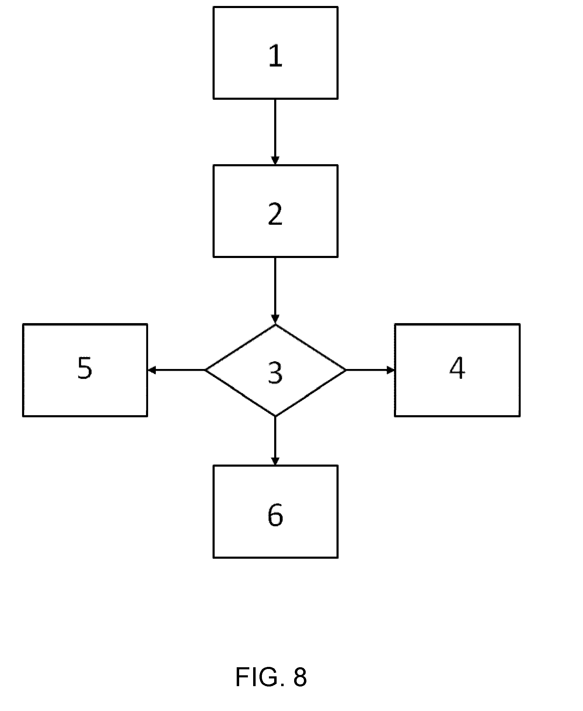

In an embodiment of the method of the invention schematically shown in the flowchart of figure 8, the boundary layer profile determined by the method and system of the invention is also used to develop correlations (6) between the boundary layer profile determined and at least one environmental variable, such as temperature, density, wind speed, solar radiation, wind direction or turbulence, which can be used in the wind farm to estimate the boundary layer profile by using indirect measurement.

In a preferred embodiment the system will work in a learning mode during a predefined period of time in which the boundary layer profile is determined and correlations between the boundary layer profile and the at least one environmental variable are developed. Once the correlations have been developed, the system will estimate the boundary layer profile based on environmental variables determined, e.g. measured, and on the correlations defined during the learning stage.

The correlations developed in a wind farm can be used to estimate the boundary layer profile in sites that are close to the wind farm where correlations have been developed.

These correlations can be generated using numerical methods that take into account different variables that have influence over the boundary layer profile. Another possibility is to obtain these correlations using experimental values obtained in a wind tunnel.

Even in the case of using direct determination of the boundary layer profile, the correlations developed in other wind farms or by numerical methods can be used to have an expected value of the shape exponent (one of the parameters that define the shape of boundary layer) that can be used in the event of sensor failure.

**Claims**

1. Method for controlling a wind turbine, comprising the steps of:

    determining a boundary layer profile of the wind coming towards the wind turbine;
    determining the wind velocity at a predetermined height based on the boundary layer profile determined; and
    operating the wind turbine to maintain the emitted noise below a predetermined noise level when the wind velocity at the predetermined height is below a predetermined value.

2. Method for controlling a wind turbine according to claim 1, wherein the boundary layer profile is determined based on a measurement of at least one sensor.

3. Method for controlling a wind turbine according to claim 2, wherein the boundary layer profile is determined based on a measurement of at least two sensors positioned at different heights.

4. Method for controlling a wind turbine according to claim 2, wherein the boundary layer profile is determined by a system of remote sensing.

5. Method for controlling a wind turbine according to claim 4, wherein the system of remote sensing is a lidar or a sodar.

6. Method for controlling a wind turbine according to any of the previous claims, comprising using the signal of wind direction to determine the wind velocity at the predetermined height.

7. Method for controlling a wind turbine according to any of the previous claims, comprising the step of developing correlations between the boundary layer profile determined and at least one environmental variable.

8. Method for controlling a wind turbine according to claim 7, wherein the environmental variable is selected from temperature, air density, wind speed, solar radiation, wind direction and turbulence.

9. Method for controlling a wind turbine according to claim 7 or 8, wherein the step of developing correlations between the boundary layer profile determined and at least one environmental variable is performed during a predefined period of time.

10. Method for controlling a wind turbine according to any of claims 7-9, comprising determining the boundary layer profile based on at least one environmental variable and on the correlations developed between the boundary layer profile determined and said at least one environmental variable.

11. Method for controlling a wind turbine according to any of claims 7-10, wherein the correlations are generated using numerical methods.

12. Method for controlling a wind turbine according to any of claims 7-11, wherein the correlations are generated using experimental values obtained in a wind tunnel.

13. Method for controlling a wind farm comprising a plurality of wind turbines, the method comprising controlling at least one of the wind turbines according to the method according to any of the previous claims.

14. Wind turbine system comprising:

    a wind turbine,
    a sensing means adapted to determine a boundary layer profile of the wind coming towards the wind turbine;
    processing means configured to determine the wind velocity at a predetermined height based on the boundary layer profile determined; and
    a wind farm controller configured to operate the wind turbine to maintain the emitted noise below a predetermined noise level when the wind velocity at the predetermined height is below a predetermined value.

15. Wind turbine system according to claim 14, comprising:

    a plurality of wind turbines,
    at least one sensing means adapted to determine a boundary layer profile of the wind coming towards at least one of the wind turbines;
    processing means configured to determine the wind velocity at a predetermined height based on the boundary layer profiles determined; and a wind farm controller configured to operate at least one of the wind turbines to maintain the emitted noise below a predetermined noise level when the wind velocity at the predetermined height is below a predetermined value.

FIG. 1

FIG. 2

FIG. 3

FIG. 4

FIG. 5

FIG. 6

FIG. 7

FIG. 8

EP 2 610 484 A1

Europäisches
Patentamt
European
Patent Office
Office européen
des brevets

# EUROPEAN SEARCH REPORT

Application Number

EP 11 38 2402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 476 316 A (VESTAS WIND SYS AS [DK]) 22 June 2011 (2011-06-22) | 1-6,9, 12-15 | INV. F03D7/02 |
| Y | * abstract * * page 1, lines 15-18 * * page 2, lines 8-14 * * page 5, lines 20-30 * * page 6, lines 23-26; figure 3 * * page 6, line 33 - page 7, line 2 * * page 9, lines 10-25; figure 4 * ----- | 7,8,10, 11 | |
| Y | WO 2010/037387 A2 (VESTAS WIND SYS AS [DK]; NIELSEN THOMAS STEINICHE BJERT [DK]; SLOTH ER) 8 April 2010 (2010-04-08) * page 3, line 1 - page 5, line 3 * * page 5, line 19 - page 6, line 4 * * page 7, lines 4-22 * ----- | 7,8,10, 11 | |
| A | WO 98/42980 A1 (RISOE FORSKNINGSCENTER [DK]; LADING LARS [DK]; FRANDSEN STEN [DK]; SAN) 1 October 1998 (1998-10-01) * page 17, lines 16-26 * ----- | 12 | |

TECHNICAL FIELDS
SEARCHED (IPC)

F03D

The present search report has been drawn up for all claims

| Place of search | Date of completion of the search | Examiner |
|---|---|---|
| Munich | 25 May 2012 | Cabrele, Silvio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

15

See Official Journal of the European Patent Office

## ANNEX TO THE EUROPEAN SEARCH REPORT
## ON EUROPEAN PATENT APPLICATION NO.

EP 11 38 2402

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2012

| Patent document cited in search report | | Publication date | Patent family member(s) | | Publication date |
|---|---|---|---|---|---|
| GB 2476316 | A | 22-06-2011 | GB | 2476316 A | 22-06-2011 |
| | | | WO | 2011076295 A2 | 30-06-2011 |
| WO 2010037387 | A2 | 08-04-2010 | CN | 102197218 A | 21-09-2011 |
| | | | EP | 2337952 A2 | 29-06-2011 |
| | | | US | 2011175356 A1 | 21-07-2011 |
| | | | WO | 2010037387 A2 | 08-04-2010 |
| WO 9842980 | A1 | 01-10-1998 | AU | 6393198 A | 20-10-1998 |
| | | | DE | 69814840 D1 | 26-06-2003 |
| | | | EP | 0970308 A1 | 12-01-2000 |
| | | | US | 6320272 B1 | 20-11-2001 |
| | | | WO | 9842980 A1 | 01-10-1998 |

EPO FORM P0459

For more details about this annex : see Official Journal of the European Patent Office, No. 12/82